# EUROPÄISCHE PATENTANMELDUNG

(11) **EP 4 757 087 A1**
(43) Veröffentlichungstag der Anmeldung: **10.06.2026**
(21) Anmeldenummer: 24217522.2
(22) Anmeldetag: 04.12.2024
(51) Int. Cl.: H02G 3/20, F16B 5/06, F21S 8/02, H02G 3/12, F21V 17/16, H02G 3/38

(54) **BEFESTIGUNGSSYSTEM ZUR BEFESTIGUNG AN EINEM AUSSCHNITT IN EINEM WANDELEMENT**

(71) Anmelder: ESYLUX GmbH & Co. KG, 22926 Ahrensburg (DE)
(72) Erfinder: Reuthe, Martin, 22607 Hamburg (DE); Streilein, Daniel, 22761 Hamburg (DE)
(74) Vertreter: Bird & Bird LLP - Hamburg

(57) **Zusammenfassung**

Dargestellt und beschrieben ist ein Befestigungssystem (1) zur Befestigung an einem Ausschnitt (13) in einem Wandelement (15) mit einer ersten Wandoberfläche (17) und einer zweiten Wandoberfläche (19), die im Wesentlichen parallel zueinander verlaufen, mit einer Befestigungseinheit (3), die eingerichtet ist, an der ersten Wandoberfläche (17) anzuliegen, und die eine Basis (5) und mindestens zwei von der Basis (5) hervorstehende Befestigungsarme (7, 7') aufweist, wobei die Befestigungsarme (7, 7') ausgestaltet sind, sich durch den Ausschnitt (13) in Richtung der zweiten Wandoberfläche (19) zu erstrecken, und einer Rasteinheit (9), die eingerichtet ist, an der zweiten Wandoberfläche (19) anzuliegen, wobei die Rasteinheit (9) mindestens zwei Aussparungen (11, 11') zur Aufnahme der Befestigungsarme (7, 7') aufweist, wobei die Rasteinheit (9) mindestens zwei Rasthaken (39, 39') aufweist, wobei die Befestigungsarme (7, 7') jeweils eine Vielzahl an Rastelementen (41) aufweisen und wobei die mindestens zwei Rasthaken (39, 39') an den mindestens zwei Aussparungen (11, 11') angeordnet und eingerichtet sind, mit mindestens einem der Rastelemente (41) einzugreifen, sodass ein maximaler Abstand zwischen der Rasteinheit (9) und der Befestigungseinheit (3) festgelegt ist.

## Beschreibung

Die Erfindung betrifft ein Befestigungssystem zur Befestigung an einem Ausschnitt in einem Wandelement mit einer ersten Wandoberfläche und einer zweiten Wandoberfläche, die im Wesentlichen parallel zueinander verlaufen.

Aus dem Stand der Technik sind Befestigungssysteme zur Befestigung an einem Ausschnitt in einem Wandelement bekannt. Insbesondere sind federbelastete Befestigungssysteme für Einbauleuchten bekannt, die an einem hervorstehenden Wandelement, wie einer herabgesetzten Decke montiert werden können. Diese federbelasteten Befestigungssysteme weisen in der Regel eine Fassung zum Einsetzen eines Leuchtelements und mindestens zwei an der Fassung befestigte vorgespannte Federbügelelemente auf. Zur Befestigung der Fassung an dem Ausschnitt in dem Wandelement werden die Federbügelelemente zusammengedrückt und durch den Ausschnitt hindurchgeführt, sodass das Wandelement zwischen den Federbügeln und der Fassung eingeklemmt wird.

Weiterhin sind Befestigungssysteme bekannt, die eine Schraubfassung aufweisen, wobei zunächst ein Montagering an dem Ausschnitt in dem Wandelement befestigt, beispielsweise eingeklemmt wird. Der Montagering weist ein Gewinde zur Befestigung eines elektrischen Bauteils auf, beispielsweise eines Leuchtelements oder einer Fassung eines Leuchtelements, wobei das elektrische Bauteil ein zum Gewinde des Montagerings komplementäres Gewinde aufweist. Das elektrische Bauteil kann an dem Montagering festgeschraubt, sodass das Wandelement zwischen dem elektrischen Bauteil und dem Montagering eingeklemmt wird.

Bei den federbelasteten Befestigungssystemen hat es sich als problematisch erwiesen, dass zur Demontage des Befestigungssystems die Federkraft, die die Federbügelelemente auf das Wandelement ausüben, überwunden werden muss, indem die Einbauleuchte oder die Fassung mit ausreichend hoher Kraft aus dem Ausschnitt herausgezogen wird. Dies hat zum einen den Nachteil, dass die Federbügelelemente das Wandelement beim Herausziehen beschädigen können und zum anderen birgt das federbelastete Befestigungssystem das Risiko eines Einklemmens, beispielsweise eines Fingers, zwischen dem Befestigungssystem und dem Wandelement. Ebenfalls nachteilig ist, dass die federbelasteten Befestigungssysteme nur an Wandelementen montiert werden können, die eine ausreichend hohe Festigkeit aufweisen, da das Befestigungssystem ansonsten Beschädigungen oder Druckstellen an dem Wandelement verursachen kann. Weiterhin nachteilig ist, dass diese Befestigungssysteme nicht an unterschiedliche Dicken der Wandelemente anpassbar sind, sodass diese Befestigungssysteme nur an Wandelementen befestigt werden können, deren Dicke auf das Befestigungssystem bzw. die Federbügelelemente angepasst ist.

Bei den beschriebenen Befestigungssystemen aufweisend eine Schraubfassung ist nachteilig, dass das elektrische Bauteil zur Montage verschraubt bzw. verdreht werden muss, sodass die Gewinde ineinandergreifen. Dies hat den Nachteil, dass an dem elektrischen Bauteil angebrachte Kabel ebenfalls verdreht werden, was das Risiko eines Kabelbruchs oder einem Herablösen der Kabelverbindungen führen kann. Weiterhin nachteilig ist, dass die Schraubverbindung bei diesen Befestigungssystemen ebenfalls keine Anpassung an unterschiedliche Dicken des Wandelements zulässt.

Generell ist es wünschenswert, dass das Befestigungssystem an Wandelementen mit unterschiedlichen Dicken und unterschiedlichen Materialien montiert und möglichst einfach und rückstandslos an dem Ausschnitt des Wandelements montiert und demontiert werden kann.

Es ist daher die Aufgabe der vorliegenden Erfindung ein Befestigungssystem an Wandelementen mit unterschiedlichen Dicken und Materialien zu montieren und möglichst einfach und rückstandslos an dem Ausschnitt des Wandelements zu montieren und zu demontieren.

Gemäß einem ersten Aspekt der Erfindung wird die genannte Aufgabe durch ein Befestigungssystem mit den Merkmalen des Patentanspruchs 1 gelöst. Das Befestigungssystem ist zur Befestigung an einem Ausschnitt in einem Wandelement mit einer ersten Wandoberfläche und einer zweiten Wandoberfläche, die im Wesentlichen parallel zueinander verlaufen. Das Befestigungssystem weist eine Befestigungseinheit auf, die eingerichtet ist, an der ersten Wandoberfläche anzuliegen, und die eine Basis und mindestens zwei von der Basis hervorstehende Befestigungsarme aufweist, wobei die Befestigungsarme ausgestaltet sind, sich durch den Ausschnitt in Richtung der zweiten Wandoberfläche zu erstrecken. Weiter weist das Befestigungssystem eine Rasteinheit auf, die eingerichtet ist, an der zweiten Wandoberfläche anzuliegen, wobei die Rasteinheit mindestens zwei Aussparungen zur Aufnahme der Befestigungsarme aufweist. Die Rasteinheit weist mindestens zwei Rasthaken auf und die Befestigungsarme weisen jeweils eine Vielzahl an Rastelementen auf. Die mindestens zwei Rasthaken sind an den mindestens zwei Aussparungen angeordnet und eingerichtet, mit mindestens einem der Rastelemente einzugreifen, sodass ein maximaler Abstand zwischen der Rasteinheit und der Befestigungseinheit festgelegt ist.

Als Wandelement kann ein Teil einer Wand oder Decke verstanden werden, der eine erste und eine zweiten Wandoberfläche aufweist. Vorzugsweise ist das Wandelement ein Teil einer abgehängten Decke. Der Ausschnitt in dem Wandelement kann beispielsweise eine Öffnung für eine Einbauleuchte oder ein Lautsprecher in einer Trockenbauwand oder eine Aussparung in einer Betonwand sein.

Das Befestigungssystem weist eine Befestigungseinheit auf, die eingerichtet ist, an der ersten Wandoberfläche anzuliegen, und die eine Basis und mindestens zwei von der Basis hervorstehende Befestigungsarme aufweist, wobei die Befestigungsarme ausgestaltet sind, sich durch den Ausschnitt in Richtung der zweiten Wandoberfläche zu erstrecken. Die erste Wandoberfläche ist vorzugsweise eine Rückseite des Wandelements und die zweite Wandoberfläche ist vorzugsweise eine Vorderseite des Wandelements. Die Basis ist eingerichtet durch den Ausschnitt hindurchgeführt zu werden und an der ersten Wandoberfläche anzuliegen. Die Befestigungsarme erstrecken sich vorzugsweise senkrecht zur ersten und/oder zweiten Wandoberfläche. Dies hat den Vorteil, dass die Basis und die Rasteinheit parallel zueinander angeordnet werden können, sodass die Rasteinheit und die Basis einen konstanten Abstand zueinander aufweisen. Dadurch kann das Risiko eines Verklemmens oder Verkantens der Rasteinheit an der Basis bzw. den Befestigungsarmen reduziert werden, sodass das Befestigungssystem besonders einfach montiert und demontiert werden kann.

Bevorzugt weisen die Befestigungsarme eine minimale Länge auf, die größer ist als ein Abstand der ersten Wandoberfläche zur zweiten Wandoberfläche. Besonders bevorzugt weisen die Befestigungsarme eine Länge von mindestens 60 mm auf. Dadurch wird erreicht, dass die Befestigungsarme durch den Ausschnitt hindurchgeführt werden und über die zweite Wandoberfläche hinausragen. Die minimale Länge der Befestigungsarme, die größer ist als der Abstand der ersten Wandoberfläche zur zweiten Wandoberfläche, was einer Dicke des Wandelements entspricht, garantiert, dass das Befestigungssystem auch an Wandelementen mit einer besonders hohen Dicke befestigt werden kann.

Weiter weist das Befestigungssystem eine Rasteinheit auf, die eingerichtet ist, an der zweiten Wandoberfläche anzuliegen, wobei die Rasteinheit mindestens zwei Aussparungen zur Aufnahme der Befestigungsarme aufweist. Die Rasteinheit weist eine der zweiten Wandoberfläche zugewandte Rückseite und eine der Rückseite gegenüberliegende, von der zweiten Wandoberfläche wegweisende Vorderseite auf. Die Rasteinheit kann auf der Rückseite elektrische Kontakte zum Kontaktieren eines elektrischen Kabels, beispielsweise eines Stromkabels, aufweisen. Weiter kann die Rasteinheit auf der Vorderseite elektrische Kontakte aufweisen, sodass die Rasteinheit eingerichtet ist elektrische Energie durchzuleiten und an der Vorderseite bereitzustellen. Vorzugsweise weist die Rasteinheit an der Vorderseite eine Buchse auf, an der ein Stecker eines elektrischen Bauteils, beispielsweise ein Leuchtelement oder ein Bewegungsmelder, aufgesteckt werden kann, sodass das elektrische Bauteil durch die Rasteinheit mit Strom versorgt werden kann. Weiter bevorzugt kann die Rasteinheit Befestigungselemente zum Befestigen des elektrischen Bauteils aufweisen. Die Befestigungselemente können Befestigungsvorsprünge oder Befestigungsaussparungen aufweisen, die form- oder kraftschlüssig mit dem elektrischen Bauteil eingreifen können. Dies hat den Vorteil, dass das elektrische Bauteil ohne zusätzliche Befestigungsmittel mit der Rasteinheit verbunden werden kann, was zu einer besonders einfachen Montage führen kann.

Die Rasteinheit weist mindestens zwei Rasthaken auf und die Befestigungsarme weisen jeweils eine Vielzahl an Rastelementen auf. Durch die zwei Rasthaken und die zwei Befestigungsarme weist das Befestigungssystem einen Rasthaken für jeden Befestigungsarm auf. Dadurch wird zum einen eine besonders einfache Montage des Befestigungssystems erreicht, da die Rasteinheit in jeder Position relativ zur Basis an dieser angebracht werden kann, sofern die Befestigungsarme durch die mindestens zwei Aussparungen hindurchgeführt werden können. Zum anderen kann die Rasteinheit durch die zwei Rasthaken an zwei Punkten mit der Basis verbunden werden, sodass die Rasteinheit in einer Ebene, die durch die beiden Punkte verläuft, befestigt werden kann. Vorzugsweise ist eines aus dem Rasthaken und dem Rastelement als Rastvorsprung ausgebildet, das mit dem anderen aus dem Rasthaken und dem Rastelement eingreift. Weiter vorzugsweise sind die Rastelemente der Befestigungsarme in Richtung einer Längsrichtung der Befestigungsarme hintereinander angeordnet. Dies hat den Vorteil, dass die Rasteinheit in einer Vielzahl an Abständen zur Basis angeordnet werden, sodass das Befestigungssystem an Wandelementen mit unterschiedlichen Dicken befestigt werden kann. Des Weiteren kann die Rasteinheit dadurch stufenweise, das heißt von einem Rastelement zu einem anderen Rastelement, an der Befestigungseinheit bzw. den Befestigungsarmen angebracht werden. Dadurch wird ermöglicht, dass die Rasteinheit in einem ersten Schritt in einem ersten Abstand zur Basis an den Befestigungsarmen angebracht werden kann und in einem zweiten Schritt in einem zweiten Abstand, der vorzugsweise geringer ist als der erste Abstand, zur Basis an den Befestigungsarmen angebracht werden kann. Dies hat den Vorteil, dass die Rasteinheit zunächst in einem großen Abstand an der Basis angebracht werden kann, was beispielsweise eine besonders einfache und komfortable Kontaktierung der Rasteinheit mit einem Stromkabel oder eine Ausrichtung des Befestigungssystems an dem Ausschnitt ermöglicht. Dadurch wird eine besonders einfache Montage und Demontage des Befestigungssystems erreicht.

Die mindestens zwei Rasthaken sind an den mindestens zwei Aussparungen angeordnet und eingerichtet, mit mindestens einem der Rastelemente einzugreifen, sodass ein maximaler Abstand zwischen der Rasteinheit und der Befestigungseinheit festgelegt ist. Die Rasthaken sind so an den zwei Aussparungen angeordnet, dass sie unmittelbar mit den Rastelementen eingreifen, wenn die Befestigungsarme durch die Aussparungen hindurchgeführt werden. Dies hat den Vorteil, dass die Rasteinheit ohne zusätzlichen Handgriff mit der Befestigungseinheit verbunden werden kann, was zu einer besonders einfachen Montage des Befestigungssystems führt. Weiterhin sind die Rasthaken und die Rastelemente so ausgebildet und angeordnet, dass sie eine Bewegung relativ zueinander nur in eine Richtung, vorzugsweise in einer Eingriffsrichtung, in der sich die Basis und die Rasteinheit aufeinander zubewegen, zulassen. Dies wird dadurch erreicht, dass die Rasthaken mit den Rastelementen eingreifen und durch eine spezielle Formgebung so ineinander eingreifen, dass sie eine Bewegung der Rasteinheit weg von der Basis verhindern und eine Bewegung der Rasteinheit hin zu der Basis zulassen, wobei die Rasthaken bei einer Bewegung der Rasteinheit zu der Basis hin von den Rastelementen freikommen und mit einem der angrenzenden Rastelement eingreifen. Dadurch wird der maximale Abstand zwischen der Rasteinheit und der Befestigungseinheit festgelegt, da eine Bewegung der Rasteinheit auf die Basis hin zugelassen wird, eine Bewegung von der Rasteinheit weg von der Basis allerdings verhindert wird. Dies hat den Vorteil, dass ein versehentliches Lösen der Rasteinheit von der Basis verhindert und eine sichere Befestigung gewährleistet werden kann.

Zusammenfassend kann also festgestellt werden, dass das Befestigungssystem an Wandelementen mit unterschiedlichen Dicken und Materialien montiert und möglichst einfach und rückstandslos an dem Ausschnitt des Wandelements montiert und demontiert werden kann.

In einer Ausführungsform sind die mindestens zwei Rasthaken zwischen einer Rastposition und einer Freigabeposition bewegbar, wobei die mindestens zwei Rasthaken in der Rastposition mit mindestens einem der Rastelemente eingreifen und in der Freigabeposition von den Rastelementen außer Eingriff sind und wobei die mindestens zwei Rasthaken in Richtung der Rastposition vorgespannt sind. Unter einer Vorspannung in Richtung der Rasthaken wird verstanden, dass dann, wenn die Rasthaken aus der Rastposition in die Freigabeposition bewegt werden, eine Rückstellkraft auf die Rasthaken wirkt, die die Rasthaken in die Rastposition zurückdrängt. Die Rasthaken können in der Rastposition vorgespannt sein, sodass die Rasthaken in eine Richtung über die Rastposition hinausgedrückt werden, oder in der Rastposition eine Neutralstellung aufweisen, in der keine Kraft auf die Rasthaken ausgeübt wird. Die Vorspannung kann durch ein Vorspannelement, das eine Kraft auf die Rasthaken ausübt, oder durch mindestens einen, elastisch verformbaren Abschnitt der Rasthaken erreicht werden. Vorzugsweise weisen die zwei Rasthaken einen integralen elastisch verformbaren Abschnitt auf, der eine Bewegung der Rasthaken zwischen der Freigabeposition und der Rastposition zulässt und die Rasthaken dann, wenn in Richtung der Freigabeposition bewegt werden, diese in Richtung der Rastposition zurückdrückt. Dies hat den Vorteil, dass die Rasthaken stets in der Rastposition verbleiben und nur von den Rastelementen freikommen, wenn diese aktiv in Richtung der Freigabeposition bewegt werden. Dadurch wird ein automatisches Eingreifen der Rasthaken mit den Rastelementen erreicht, wodurch das Risiko eines versehentlichen Lösens der Rasteinheit von der Befestigungseinheit reduziert werden kann.

In einer Ausführungsform weist die Basis eine Durchgangsöffnung auf, sodass die Basis in Form eines Rings gestaltet ist. Die Durchgangsöffnung kann dabei einen bogenförmigen oder kreisrunden Querschnitt aufweisen. Durch die Durchgangsöffnung wird erreicht, dass die Basis den Ausschnitt im Wandelement nicht vollständig verschließt, sodass ein rückwärtiger Bereich hinter der Befestigungseinheit auch dann noch zugänglich ist, wenn die Befestigungseinheit in dem Ausschnitt des Wandelements angeordnet ist. Dadurch können zum einen Elemente im rückwärtigen Bereich weiterhin zugänglich gemacht werden und zum anderen können Abschnitte der Rasteinheit in dem rückwärtigen Bereich verstaut werden, beispielsweise, wenn die Rasteinheit mit einem Stromkabel verbunden wird. Dadurch kann eine besonders einfache Montage des Befestigungssystems und eine geringe Bauhöhe ausgehend von der zweiten Wandoberfläche erreicht werden.

In einer bevorzugten Ausführungsform sind die Befestigungsarme an einem Rand der Durchgangsöffnung der Basis angeordnet. Darunter wird verstanden, dass die Befestigungsarme an einem inneren Rand der Basis, die vorzugsweise in Form eines Rings gestaltet ist, angeordnet sind. Dadurch kann die Durchgangsöffnung einen maximalen Querschnitt aufweisen, wodurch ein rückwärtiger Bereich besser zugänglich gemacht werden kann, was zu einer besonders einfachen Montage und Demontage des Befestigungssystems führen kann.

In einer weiter bevorzugten Ausführungsform sind die Befestigungsarme diametral an der Durchgangsöffnung der Basis angeordnet. Darunter wird verstanden, dass die Befestigungsarme auf einer Geraden liegen, die einen Mittelpunkt der Durchgangsöffnung schneidet. Dadurch kann eine gleichmäßige Kraftverteilung erreicht werden, was ein Herauslösen oder Herausrutschen der Basis aus dem Ausschnitt des Wandelements verhindern kann. Außerdem kann dadurch ein Verkippen der Befestigungseinheit verhindert werden, sodass das Befestigungssystem besonders fest an dem Ausschnitt des Wandelements montiert werden kann.

In einer Ausführungsform können die Rasthaken durch eine Bewegung aufeinander zu von den Rastelementen gelöst werden. Die Rasthaken können so angeordnet sein, dass sie durch die Bewegung aufeinander zu von der Rastposition in die Freigabeposition bewegt werden, sodass die Rasthaken von den Rastelementen freikommen. Dies hat den Vorteil, dass beide Rasthaken mit einer Hand, durch zusammendrücken der Rasthaken, in die Freigabeposition bewegt werden können. Dadurch kann eine besonders einfache Demontage des Befestigungssystems erreicht werden.

In einer Ausführungsform weist die Basis eine erste Auflagefläche auf, die eingerichtet ist, an der ersten Wandoberfläche anzuliegen. Die erste Auflagefläche ist vorzugsweise parallel zur ersten Wandoberfläche angeordnet. Dies hat den Vorteil, dass die erste Auflagefläche vollflächig auf der ersten Wandoberfläche, das heißt über die gesamte Umfangsfläche der Basis auf der ersten Wandoberfläche aufliegen kann. Dadurch kann eine besonders gute und robuste Abstützung der Basis an der ersten Wandoberfläche erreicht werden, wodurch das Befestigungssystem besonders fest an dem Wandelement befestigt werden kann.

In einer bevorzugten Ausführungsform stützen die Befestigungsarme an einer der ersten Auflagefläche gegenüberliegenden Fläche der Basis ab und/oder sind mit dieser Fläche verbunden. Die Befestigungsarme weisen vorzugsweise einen Befestigungsabschnitt auf, der sich in einer Richtung senkrecht zu einer Längsachse der Befestigungsarme erstreckt und mit der Basis verbunden ist. Die Befestigungsarme können kraft- und/oder formschlüssig mit der Basis verbunden sein. Dies hat zum einen den Vorteil, dass keine zusätzlichen Befestigungsmittel zwischen der Basis und den Befestigungsarmen notwendig sind und zum anderen, dass die Basis eine Bewegung der Befestigungsabschnitte aufeinander zu verhindern kann, sodass die Befestigungsarme nicht durch den Ausschnitt rutschen und von dem Wandelement freikommen können.

In einer Ausführungsform weist die Basis wenigstens einen, vorzugsweise elastisch, verformbaren Abschnitt auf, und ist eingerichtet, durch den Ausschnitt hindurchgeführt zu werden, wenn der Ausschnitt eine geringere Ausdehnung als die Basis aufweist. Durch den verformbaren Abschnitt wird erreicht, dass die Basis dann, wenn sie verformt wird, einen geringeren Querschnitt aufweisen kann. Mit dem geringeren Querschnitt kann die Basis durch Ausschnitte hindurchgeführt werden, die einen geringeren Querschnitt aufweisen als die Basis vor ihrer Verformung. Die Basis kann dann, wenn sie durch den Ausschnitt hindurchgeführt wurde, zurückgeformt werden, sodass wenigstens ein Abschnitt der Basis an der ersten Wandoberfläche anliegt und sich an diesem abstützen kann. Wie bereits erwähnt erstrecken sich die Befestigungsarme durch den Ausschnitt hindurch in Richtung der zweiten Wandoberfläche, sodass die Rasteinheit an der Befestigungseinheit angebracht und das Wandelement zwischen der Rasteinheit und der Befestigungseinheit eingeklemmt werden kann.

In einer Ausführungsform weist die Basis einen Vorsprung auf, der die Durchgangsöffnung umgibt und ist ausgestaltet, am Rand des Ausschnitts im Wandelement anzuliegen, wobei der Vorsprung eine Querschnittsfläche definiert, wobei die Basis durch Verformen des verformbaren Abschnitts so verformt werden kann, dass ihr Querschnitt in wenigstens einer Ebene kleiner ist als die Querschnittfläche. Der Vorsprung ist eingerichtet an der ersten Wandoberfläche anzuliegen, wenn die Basis verformt und durch den Ausschnitt in dem Wandelement hindurchgeführt wurde. Durch den Vorsprung kann eine zusätzliche Auflagefläche geschaffen werden, die an der ersten Wandoberfläche anliegt, sodass die Basis mit einer größeren Fläche an dem Wandelement anlegen und eine robustere Befestigung des Befestigungssystems an dem Wandelement erreicht werden kann.

In einer Ausführungsform sind die Befestigungsarme, vorzugsweise elastisch, verformbar und eingerichtet dann, wenn die Befestigungsarme mit den Rasthaken eingreifen, so verformt zu werden, dass die Befestigungsarme durch die Durchgangsöffnung der Basis zurückgeführt werden können. Vorzugsweise sind die Befestigungsarme und die Basis aus demselben Material hergestellt. Durch die Verformbarkeit der Befestigungsarme können diese dann, wenn das Befestigungssystem an dem Wandelement angebracht ist, durch die Durchführöffnung hindurch in Richtung der ersten Wandoberfläche geführt werden. Mit anderen Worten können die Befestigungsarme nach der Montage der Rasteinheit in einem rückwärtigen Bereich verstaut werden, sodass diese nicht in Richtung der zweiten Wandoberfläche herausragen, um ein elektrisches Bauteil an dem Befestigungssystem anbringen zu können. Durch die Verformung der Befestigungsarme kann zudem erreicht werden, dass die Befestigungsarme nach der Montage der Rasteinheit nicht abgeschnitten werden müssen, wodurch eine reproduzierbare Montage und Demontage des Befestigungssystems erreicht werden kann, sodass das Befestigungssystem wiederverwendet werden kann.

In einer Ausführungsform weisen die Rasthaken einen Hebel auf, wobei der Hebel eingerichtet ist, den Rasthaken von den Rastelementen zu lösen. Der Hebel kann so eingerichtet und angeordnet sein, dass er eine Kraftumlenkung erreicht, sodass beispielsweise eine Betätigung des Hebels in eine erste Richtung eine Bewegung des Rasthakens in eine zweite Richtung bewirkt, wobei eine Bewegung des Rasthakens in die zweite Richtung einer Bewegung in Richtung der Freigabeposition entspricht. Durch den Hebel kann eine leichtere und schnellere Betätigung der Rasthaken erreicht werden, was die Montage und Demontage des Befestigungssystems vereinfachen kann. Die Kraftumlenkung kann auch dazu beitragen, dass weniger Kraftaufwand benötigt wird, um den Hebel zu betätigen und den Rasthaken von den Rastelementen zu lösen. Somit kann der Hebel eine benutzerfreundlichere Handhabung des Befestigungssystems ermöglichen.

In einer Ausführungsform weist die Rasteinheit eine zweite Auflagefläche auf, die eingerichtet ist an der zweiten Wandoberfläche des Wandelements anzuliegen, dann wenn die Befestigungsarme mit den Rasthaken eingreifen. Die zweite Auflagefläche ist vorzugsweise parallel zur ersten Auflagefläche und/oder zur zweiten Wandoberfläche angeordnet. Dies hat den Vorteil, dass die zweite Auflagefläche vollflächig auf der zweiten Wandoberfläche, das heißt über die gesamte Umfangsfläche der Rasteinheit auf der zweiten Wandoberfläche aufliegt. Dadurch kann eine besonders gute und robuste Abstützung der Rasteinheit an der zweiten Wandoberfläche erreicht werden, wodurch das Befestigungssystem besonders fest an dem Wandelement befestigt werden kann.

In einer Ausführungsform weist die Rasteinheit eine größere Ausdehnung auf als die Durchgangsöffnung. Dadurch kann erreicht werden, dass die Rasteinheit die Durchgangsöffnung vollständig verschließt, sodass ein rückwärtiger Bereich des Wandelements nicht mehr zugänglich oder zu sehen ist. Vorzugsweise weist die Rasteinheit zwei weitere Aussparungen auf, durch die die Befestigungsarme hindurchgeführt werden können, wenn die Befestigungsarme durch die Durchgangsöffnung der Basis zurückgeführt werden. Dadurch kann erreicht werden, dass die Befestigungsarme in dem rückwärtigen Bereich verstaut werden können, auch wenn die Rasteinheit die Durchgangsöffnung verschließt.

Nachfolgend wird die vorliegende Erfindung anhand einer lediglich ein bevorzugtes Ausführungsbeispiel zeigenden Zeichnungen erläutert, in der
Figur 1 eine schematische Perspektivansicht eines Ausführungsbeispiels eines Befestigungssystems zeigt,
Figuren 2a bis 2d schematische Perspektivansichten des Ausführungsbeispiels des Befestigungssystems aus Figur 1 zeigen, und
Figuren 3a bis 3d schematische Teilansichten des Ausführungsbeispiels des Befestigungssystems aus Figur 1 zeigen.

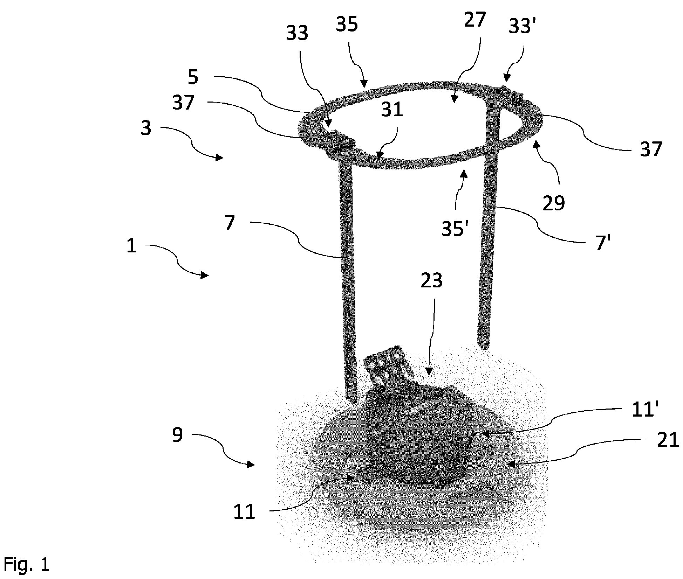

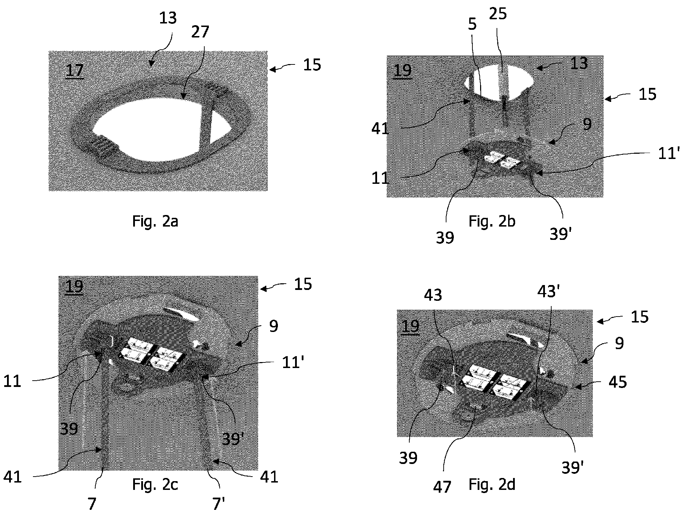

Figur 1 zeigt eine schematische Perspektivansicht eines Ausführungsbeispiels eines Befestigungssystems 1. Das Befestigungssystem 1 weist eine Befestigungseinheit 3, die eine Basis 5 und zwei von der Basis 5 hervorstehende Befestigungsarme 7, 7' aufweist. Weiter weist das Befestigungssystem 1 eine Rasteinheit 9 auf. Die Rasteinheit 9 weist zwei Aussparungen 11, 11' zur Aufnahme der Befestigungsarme 7, 7' auf. Wie in Figur 2 gezeigt, kann das Befestigungssystem 1 an einem Ausschnitt 13 in einem Wandelement 15 mit einer ersten Wandoberfläche 17 und einer zweiten Wandoberfläche 19, die im Wesentlichen parallel zueinander verlaufen, befestigt werden.

Die Befestigungseinheit 3 ist eingerichtet, an der ersten Wandoberfläche 17 anzuliegen (siehe Figur 2a). Die Befestigungsarme 7, 7' sind ausgestaltet, sich durch den Ausschnitt 13 in Richtung der zweiten Wandoberfläche 19 zu erstrecken. Die erste Wandoberfläche 17 ist vorzugsweise eine Rückseite des Wandelements 15 und die zweite Wandoberfläche 19 ist vorzugsweise eine Vorderseite des Wandelements 15.

Die Rasteinheit 9 weist eine Rückseite 21 und auf der Rückseite 21 angeordnete elektrische Kontakte 23 zum Kontaktieren eines elektrischen Kabels 25 (siehe Figur 2b), beispielsweise eines Stromkabels, auf. Die Basis 5 weist eine Durchgangsöffnung 27 auf, sodass die Basis 5 in Form eines Rings gestaltet ist. Die Durchgangsöffnung 27 weist einen bogenförmigen oder kreisrunden Querschnitt auf. Durch die Durchgangsöffnung 27 wird erreicht, dass die Basis 5 den Ausschnitt 13 im Wandelement 15 nicht vollständig verschließt, sodass ein rückwärtiger Bereich hinter der Befestigungseinheit 3 auch dann noch zugänglich ist, wenn die Befestigungseinheit 3 in dem Ausschnitt 13 des Wandelements 15 angeordnet ist. Dadurch können zum einen Elemente im rückwärtigen Bereich weiterhin zugänglich gemacht werden und zum anderen können Abschnitte der Rasteinheit 9 in dem rückwärtigen Bereich verstaut werden, beispielsweise, wenn die Rasteinheit 9 mit dem Kabel 25 verbunden wird. Dadurch kann eine besonders einfache Montage des Befestigungssystems 1 und eine geringe Bauhöhe ausgehen von der zweiten Wandoberfläche 19 erreicht werden.

Die Basis 5 weist eine erste Auflagefläche 29 auf, die eingerichtet ist, an der ersten Wandoberfläche 17 des Wandelements 15 (siehe Figur 2a) anzuliegen. Die erste Auflagefläche 29 ist parallel zur ersten Wandoberfläche 17 angeordnet. Dies hat den Vorteil, dass die erste Auflagefläche 29 vollflächig auf der ersten Wandoberfläche 17, das heißt über die gesamte Umfangsfläche der Basis 5 auf der ersten Wandoberfläche 17 aufliegen kann. Dadurch kann eine besonders gute und robuste Abstützung der Basis 5 an der ersten Wandoberfläche 17 erreicht werden, wodurch das Befestigungssystem 1 besonders fest an dem Wandelement 15 befestigt werden kann.

Die Befestigungsarme 7, 7' stützen sich an einer der ersten Auflagefläche 29 gegenüberliegenden Fläche 31 der Basis 5 ab und/oder sind mit dieser Fläche 31 verbunden. Die Befestigungsarme 7, 7' weisen einen Befestigungsabschnitt 33, 33' auf, der sich in einer Richtung senkrecht zu einer Längsachse der Befestigungsarme 7, 7' erstreckt und mit der Basis 5 verbunden ist. Die Befestigungsarme 7, 7' können kraft- und/oder formschlüssig mit der Basis 5 verbunden sein.

Die Basis 5 weist zwei elastisch verformbare Abschnitte 35, 35' auf, und ist eingerichtet, durch den Ausschnitt 13 hindurchgeführt zu werden, wenn der Ausschnitt 13 eine geringere Ausdehnung als die Basis 5 aufweist. Durch die verformbaren Abschnitte 35, 35' wird erreicht, dass die Basis 5 dann, wenn sie verformt wird, einen geringeren Querschnitt aufweisen kann. Mit dem geringeren Querschnitt kann die Basis 5 durch Ausschnitte 13 hindurchgeführt werden, die einen geringeren Querschnitt aufweisen als die Basis 5 vor ihrer Verformung. Die Basis 5 kann dann, wenn sie durch den Ausschnitt 13 hindurchgeführt wurde (wie in Figur 2a gezeigt), zurückgeformt werden, sodass wenigstens ein Abschnitt der Basis 5 an der ersten Wandoberfläche 17 anliegt und sich an diesem abstützen kann.

Zur Abstützung der Basis 5 an der ersten Wandoberfläche 17 weist die Basis 5 einen Vorsprung 37 auf, der die Durchgangsöffnung 27 umgibt und ist ausgestaltet, am Rand des Ausschnitts 13 im Wandelement 15 anzuliegen, wobei der Vorsprung 37 eine Querschnittsfläche definiert, wobei die Basis 5 durch Verformen wenigstens eines der verformbaren Abschnitte 35, 35' so verformt werden kann, dass ihr Querschnitt in wenigstens einer Ebene kleiner ist als die Querschnittfläche. Der Vorsprung 37 ist eingerichtet an der ersten Wandoberfläche 17 anzuliegen, wenn die Basis 5 verformt und durch den Ausschnitt 13 in dem Wandelement 15 hindurchgeführt wurde (wie in Figur 2a gezeigt). Durch den Vorsprung 37 kann eine zusätzliche Auflagefläche geschaffen werden, die an der ersten Wandoberfläche 17 anliegt, sodass die Basis 5 mit einer größeren Fläche an dem Wandelement 15 anlegen und eine robustere Befestigung des Befestigungssystems 1 an dem Wandelement 15 erreicht werden kann. Die Befestigung des Befestigungssystems 1 an dem Wandelement 15 wird nachfolgend anhand der Figuren 2a bis 2d näher erläutert.

Figuren 2a bis 2d zeigen schematische Perspektivansichten des Ausführungsbeispiels des Befestigungssystems 1 aus Figur 1, wobei Figur 2a die Befestigungseinheit 3 in einem an dem Ausschnitt 13 des Wandelements 15 befestigten Zustand zeigt. Die Basis 5 ist eingerichtet durch den Ausschnitt 13 hindurchgeführt zu werden und an der ersten Wandoberfläche 17 anzuliegen. Die Befestigungsarme 7, 7' erstrecken sich vorzugsweise senkrecht zur ersten und/oder zweiten Wandoberfläche 17, 19. Dies hat den Vorteil, dass die Basis 5 und die Rasteinheit 9 parallel zueinander angeordnet werden können, sodass die Rasteinheit 9 und die Basis 5 einen konstanten Abstand zueinander aufweisen. Die Befestigungsarme 7, 7' weisen eine Länge auf, die größer ist als ein Abstand der ersten Wandoberfläche 17 zur zweiten Wandoberfläche 19. Dadurch wird erreicht, dass die Befestigungsarme 7, 7' durch den Ausschnitt 13 hindurchgeführt werden und über die zweite Wandoberfläche 19 hinausragen.

Die Befestigungsarme 7, 7' sind an einem Rand der Durchgangsöffnung 27 der Basis 5 angeordnet. Darunter wird verstanden, dass die Befestigungsarme 7, 7' an einem inneren Rand der Basis 5, die vorzugsweise in Form eines Rings gestaltet ist, angeordnet sind. Dadurch kann die Durchgangsöffnung 27 einen maximalen Querschnitt aufweisen, wodurch ein rückwärtiger Bereich besser zugänglich gemacht werden kann, was zu einer besonders einfachen Montage und Demontage des Befestigungssystems 1 führen kann.

Weiterhin sind die Befestigungsarme 7, 7' diametral an der Durchgangsöffnung 27 der Basis angeordnet. Darunter wird verstanden, dass die Befestigungsarme 7, 7' auf einer Geraden liegen, die einen Mittelpunkt der Durchgangsöffnung 27 schneidet. Dadurch kann eine gleichmäßige Kraftverteilung erreicht werden, was ein Herauslösen oder Herausrutschen der Basis 5 aus dem Ausschnitt 13 des Wandelements 15 verhindern kann.

In Figur 2b ist das Befestigungssystem 1 in einem Zustand gezeigt, in dem die Rasteinheit 9 in einem Abstand zur zweiten Wandoberfläche 19 mit der Befestigungseinheit 3 verbunden ist. Die Rasteinheit 9 weist zwei Rasthaken 39, 39' auf und die Befestigungsarme 7, 7' weisen jeweils eine Vielzahl an Rastelementen 41 auf. Durch die zwei Rasthaken 39, 39' und die zwei Befestigungsarme 7, 7' weist das Befestigungssystem 1 einen Rasthaken 39, 39' für jeden Befestigungsarm 7, 7' auf. Dadurch wird zum einen eine besonders einfache Montage des Befestigungssystems 1 erreicht, da die Rasteinheit 9 in jeder Position relativ zur Basis 5 an dieser angebracht werden kann, sofern die Befestigungsarme 7, 7' durch die zwei Aussparungen 11, 11' hindurchgeführt werden können. Zum anderen kann die Rasteinheit 9 durch die zwei Rasthaken 39, 39' an zwei Punkten mit der Basis 5 verbunden werden, sodass die Rasteinheit 9 in einer Ebene, die durch die beiden Punkte verläuft, befestigt werden kann. Eines aus dem Rasthaken 7, 7' und dem Rastelement 41 ist als Rastvorsprung ausgebildet, das mit dem anderen aus dem Rasthaken 39, 39' und dem Rastelement 41 eingreift. Die Rastelemente 41 der Befestigungsarme 7, 7' sind in Richtung einer Längsrichtung der Befestigungsarme 7, 7' hintereinander angeordnet. Dies hat den Vorteil, dass die Rasteinheit 9 in einer Vielzahl an Abständen zur Basis 5 angeordnet werden kann, sodass das Befestigungssystem 1 an Wandelementen 15 mit unterschiedlichen Dicken befestigt werden kann. Des Weiteren kann die Rasteinheit 9 dadurch stufenweise, das heißt von einem Rastelement 41 zu einem anderen Rastelement 41, an der Befestigungseinheit 3 bzw. den Befestigungsarmen 7, 7' angebracht werden. Dadurch wird ermöglicht, dass die Rasteinheit 9, wie in Figur 2b gezeigt, in einem ersten Schritt in einem ersten Abstand zur Basis 5 an den Befestigungsarmen 7, 7' angebracht werden kann und in einem zweiten Schritt, wie in Figur 2c gezeigt, in einem zweiten Abstand, der vorzugsweise geringer ist als der erste Abstand, zur Basis 5 an den Befestigungsarmen 7, 7' angebracht werden kann.

In Figur 2c ist das Befestigungssystem 1 in einem Zustand gezeigt, in dem das Befestigungssystem 1 so an dem Wandelement 15 befestigt ist, dass das Wandelement 15 zwischen der Befestigungseinheit 3 und der Rasteinheit 9 eingeklemmt ist bzw. die Rasteinheit 9 und die Befestigungseinheit 3 einen minimalen Abstand zum Wandelement 15 aufweisen.

Die Rasteinheit 9 ist demnach eingerichtet, an der zweiten Wandoberfläche 19 anzuliegen. In Figur 2c ist ebenfalls gezeigt, dass die Rasteinheit 9 eine größere Ausdehnung aufweist als die Durchgangsöffnung 27. Dadurch kann erreicht werden, dass die Rasteinheit 9 die Durchgangsöffnung 27 vollständig verschließt, sodass ein rückwärtiger Bereich des Wandelements 15 nicht mehr zugänglich oder zu sehen ist.

Die zwei Rasthaken 39, 39' sind an den zwei Aussparungen 11, 11' angeordnet und eingerichtet, mit mindestens einem der Rastelemente 41 einzugreifen, sodass ein maximaler Abstand zwischen der Rasteinheit 9 und der Befestigungseinheit 3 festgelegt ist. Die Rasthaken 39, 39' sind so an den zwei Aussparungen 11, 11' angeordnet, dass sie unmittelbar mit den Rastelementen 41 eingreifen, wenn die Befestigungsarme 7, 7' durch die Aussparungen 11, 11' hindurchgeführt werden. Dies hat den Vorteil, dass die Rasteinheit 9 ohne zusätzlichen Handgriff mit der Befestigungseinheit 3 verbunden werden kann, was zu einer besonders einfachen Montage des Befestigungssystems 1 führt. Weiterhin sind die Rasthaken 39, 39' und die Rastelemente 41 so ausgebildet und angeordnet, dass sie eine Bewegung relativ zueinander nur in eine Richtung, vorzugsweise in einer Eingriffsrichtung, in der sich die Basis 5 und die Rasteinheit 9 aufeinander zubewegen, zulassen (wie von Figur 2b zu Figur 2c gezeigt). Dies wird dadurch erreicht, dass die Rasthaken 39, 39' mit den Rastelementen 41 eingreifen und durch eine spezielle Formgebung so ineinander eingreifen, dass sie eine Bewegung der Rasteinheit 9 weg von der Basis 5 verhindern und eine Bewegung der Rasteinheit 9 hin zu der Basis 5 zulassen, wobei die Rasthaken 39, 39' bei einer Bewegung der Rasteinheit 9 zu der Basis 5 hin von den Rastelementen 41 freikommen und mit einem der angrenzenden Rastelementen 41 eingreift. Dadurch wird der maximale Abstand zwischen der Rasteinheit 9 und der Befestigungseinheit 3 festgelegt, da eine Bewegung der Rasteinheit 9 auf die Basis 5 hin zugelassen wird, eine Bewegung von der Rasteinheit 9 weg von der Basis 5 allerdings verhindert wird.

In Figur 2d ist das Befestigungssystem 1 in einem montierten Zustand gezeigt, in dem die Befestigungsarme 7, 7' durch die Rasteinheit 9 und den Ausschnitt 13 hindurch zurückgeführt wurden. Dazu sind die Befestigungsarme 7, 7', vorzugsweise elastisch, verformbar und eingerichtet dann, wenn die Befestigungsarme 7, 7' mit den Rasthaken 39, 39' eingreifen, so verformt zu werden, dass die Befestigungsarme 7, 7' durch die Durchgangsöffnung 27 der Basis 5 zurückgeführt werden können. Durch die Verformbarkeit der Befestigungsarme 7, 7' können diese dann, wenn das Befestigungssystem 1, wie in Figur 2d gezeigt, an dem Wandelement 15 angebracht ist, durch die Durchführöffnung 27 hindurch in Richtung der ersten Wandoberfläche 17 geführt werden. Mit anderen Worten können die Befestigungsarme 7, 7' nach der Montage der Rasteinheit 9 in einem rückwärtigen Bereich verstaut werden, sodass diese nicht in Richtung der zweiten Wandoberfläche 19 herausragen, um ein elektrisches Bauteil an dem Befestigungssystem 1 anbringen zu können.

Dazu weist die Rasteinheit 9 zwei Öffnungen 43, 43' auf, durch die die Befestigungsarme 7, 7' hindurchgeführt werden können, wenn die Befestigungsarme 7, 7' durch die Durchgangsöffnung 27 der Basis 5 zurückgeführt werden. Die zwei Öffnungen 43, 43' sind an den Aussparungen 11, 11' angeordnet. Dadurch kann erreicht werden, dass die Befestigungsarme 7, 7' in dem rückwärtigen Bereich verstaut werden können, auch wenn die Rasteinheit 9 die Durchgangsöffnung 27 verschließt.

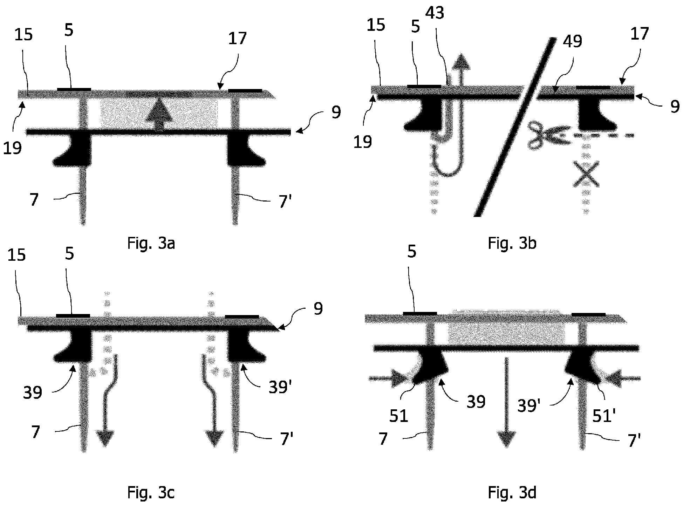

Weiter weist die Rasteinheit 9 auf einer Vorderseite 45 elektrische Kontakte auf, sodass die Rasteinheit 9 eingerichtet ist elektrische Energie durchzuleiten und an der Vorderseite 45 bereitzustellen. Dazu weist die Rasteinheit 9 an der Vorderseite 45 eine Buchse 47 auf, an der ein nicht dargestellter Stecker eines nicht dargestellten elektrischen Bauteils, beispielsweise ein Leuchtelement oder ein Bewegungsmelder, aufgesteckt und verbunden werden kann, sodass das elektrische Bauteil durch die Rasteinheit 9 mit Strom versorgt werden kann. Die Montage und Demontage des Befestigungssystem wird nachfolgend anhand der Figuren 3a bis 3d beschrieben.

Figuren 3a bis 3d zeigen schematische Teilansichten des Ausführungsbeispiels des Befestigungssystems 1 aus Figur 1, wobei in den Figuren 3a und 3b eine Montage des Befestigungssystems 1 und in den Figuren 3c und 3d eine Demontage des Befestigungssystems 1 gezeigt ist. Die erste Auflagefläche 29 der Basis 5 ist vorzugsweise parallel zur ersten Wandoberfläche 17 angeordnet. Dies hat den Vorteil, dass die erste Auflagefläche 29 vollflächig auf der ersten Wandoberfläche 17, das heißt über die gesamte Umfangsfläche der Basis 5 auf der ersten Wandoberfläche 17 aufliegen kann. Dadurch kann eine besonders gute und robuste Abstützung der Basis 5 an der ersten Wandoberfläche 17 erreicht werden, wodurch das Befestigungssystem 1 besonders fest an dem Wandelement 15 befestigt werden kann.

Die Rasteinheit 9 weist eine zweite Auflagefläche 49 auf, die eingerichtet ist an der zweiten Wandoberfläche 19 des Wandelements 15 anzuliegen, dann wenn die Befestigungsarme 7, 7' mit den Rasthaken 39, 39' eingreifen. Die zweite Auflagefläche 49 ist vorzugsweise parallel zur ersten Auflagefläche 29 und/oder zur zweiten Wandoberfläche 19 angeordnet. Dies hat den Vorteil, dass die zweite Auflagefläche 49 vollflächig auf der zweiten Wandoberfläche 19, das heißt über die gesamte Umfangsfläche der Rasteinheit 9 auf der zweiten Wandoberfläche 19 aufliegt. Dadurch kann eine besonders gute und robuste Abstützung der Rasteinheit 9 an der zweiten Wandoberfläche 19 erreicht werden, wodurch das Befestigungssystem 1 besonders fest an dem Wandelement 15 befestigt werden kann.

In Figur 3b ist gezeigt, dass dann, wenn die Rasteinheit 9 mit der Befestigungseinheit 3 verbunden ist und mit der zweiten Auflagefläche 49 an der zweiten Wandoberfläche 19 anliegt, die Befestigungsarme 7, 7', wie durch den Pfeil angedeutet, verformt und durch die zwei Öffnungen 43, 43' geführt werden können. Dadurch kann vermieden werden, dass die Befestigungsarme 7, 7'abgeschnitten werden müssen, wodurch eine reproduzierbare Montage und Demontage des Befestigungssystems 1 erreicht werden kann, sodass das Befestigungssystem 1 wiederverwendet werden kann. Die Demontage des Befestigungssystems 1 ist in Figur 3c gezeigt.

Wie in Figur 3c dargestellt, kann das Befestigungssystem 1 demontiert werden, indem die Befestigungsarme 7, 7' aus den Öffnungen 43, 43' herausgeführt und vorzugsweise ihre Ursprungsform annehmen. Dann, wenn die Befestigungsarme 7, 7' aus den Öffnungen 43, 43' geführt wurden, können Rasthaken 39,39' von den Rastelementen 41 gelöst werden, wie in Figur 3d gezeigt.

Wie in Figur 3d gezeigt, sind die zwei Rasthaken 39, 39'zwischen einer Rastposition (Figuren 3a bis 3c) und einer Freigabeposition (Figur 3d) bewegbar, wobei die zwei Rasthaken 39, 39' in der Rastposition mit mindestens einem der Rastelemente 41 eingreifen und in der Freigabeposition von den Rastelementen 41 außer Eingriff sind. Die zwei Rasthaken 39, 39' sind in Richtung der Rastposition vorgespannt. Die Rasthaken 39, 39' weisen einen Hebel 51, 51' auf, der eingerichtet ist, den Rasthaken 39, 39' von den Rastelementen 41 zu lösen. Durch den Hebel 51, 51' kann eine leichtere und schnellere Betätigung der Rasthaken 39, 39' erreicht werden, was die Montage und Demontage des Befestigungssystems 1 vereinfachen kann.

Wie in Figur 3d gezeigt, können die Rasthaken 39, 39' durch eine Bewegung aufeinander zu von den Rastelementen 41 gelöst werden. Die Rasthaken 39, 39' können so angeordnet sein, dass sie durch die Bewegung aufeinander zu von der Rastposition in die Freigabeposition bewegt werden, sodass die Rasthaken 39, 39' von den Rastelementen 41 freikommen. Dies hat den Vorteil, dass beide Rasthaken 39, 39' mit einer Hand, durch zusammendrücken der Rasthaken 39, 39' oder der Hebel 51, 51', in die Freigabeposition bewegt werden können. Dadurch kann eine besonders einfache Demontage des Befestigungssystems 1 erreicht werden.

Zusammenfassend kann also festgestellt werden, dass das Befestigungssystem 1 an Wandelementen 15 mit unterschiedlichen Dicken und Materialien montiert und möglichst einfach und rückstandslos an dem Ausschnitt 13 des Wandelements 15 montiert und demontiert werden kann.

### Bezugszeichenliste:

- 1: Befestigungssystem
- 3: Befestigungseinheit
- 5: Basis
- 7, 7': Befestigungsarm
- 9: Rasteinheit
- 11, 11': Aussparung
- 13: Ausschnitt
- 15: Wandelement
- 17: erste Wandoberfläche
- 19: zweite Wandoberfläche
- 21: Rückseite
- 23: elektrische Kontakte
- 25: Kabel
- 27: Durchgangsöffnung
- 29: erste Auflagefläche
- 31: Fläche
- 33, 33': Befestigungsabschnitt
- 35, 35`: verformbarer Abschnitt
- 37: Vorsprung
- 39,39': Rasthaken
- 41: Rastelement
- 43, 43': Öffnung
- 45: Vorderseite
- 47: Buchse
- 49: zweite Auflagefläche
- 51, 51': Hebel

## Patentansprüche

1. Befestigungssystem (1) zur Befestigung an einem Ausschnitt (13) in einem Wandelement (15) mit einer ersten Wandoberfläche (17) und einer zweiten Wandoberfläche (19), die im Wesentlichen parallel zueinander verlaufen, mit
einer Befestigungseinheit (3), die eingerichtet ist, an der ersten Wandoberfläche (17) anzuliegen, und die eine Basis (5) und mindestens zwei von der Basis (5) hervorstehende Befestigungsarme (7, 7') aufweist, wobei die Befestigungsarme (7, 7') ausgestaltet sind, sich durch den Ausschnitt (13) in Richtung der zweiten Wandoberfläche (19) zu erstrecken, und
einer Rasteinheit (9), die eingerichtet ist, an der zweiten Wandoberfläche (19) anzuliegen,
wobei die Rasteinheit (9) mindestens zwei Aussparungen (11, 11') zur Aufnahme der Befestigungsarme (7, 7') aufweist,
wobei die Rasteinheit (9) mindestens zwei Rasthaken (39, 39') aufweist, wobei die Befestigungsarme (7, 7') jeweils eine Vielzahl an Rastelementen (41) aufweisen und
wobei die mindestens zwei Rasthaken (39, 39') an den mindestens zwei Aussparungen (11, 11') angeordnet und eingerichtet sind, mit mindestens einem der Rastelemente (41) einzugreifen, sodass ein maximaler Abstand zwischen der Rasteinheit (9) und der Befestigungseinheit (3) festgelegt ist.

2. Befestigungssystem (1) nach Anspruch 1, wobei die mindestens zwei Rasthaken (39, 39') zwischen einer Rastposition und einer Freigabeposition bewegbar sind, wobei die mindestens zwei Rasthaken (39, 39') in der Rastposition mit mindestens einem der Rastelemente (41) eingreifen und in der Freigabeposition von den Rastelementen (41) außer Eingriff sind und wobei die mindestens zwei Rasthaken (39, 39') in Richtung der Rastposition vorgespannt sind.

3. Befestigungssystem (1) nach Anspruch 1 oder Anspruch 2, wobei die Basis (5) eine Durchgangsöffnung (27) aufweist, sodass die Basis (5) in Form eines Rings gestaltet ist.

4. Befestigungssystem (1) nach Anspruch 3, wobei die Befestigungsarme (7, 7') an einem Rand der Durchgangsöffnung (27) der Basis (5) angeordnet sind.

5. Befestigungssystem (1) nach Anspruch 3 oder 4, wobei die Befestigungsarme (7, 7') diametral an der Durchgangsöffnung (27) der Basis (5) angeordnet sind.

6. Befestigungssystem (1) nach einem der vorhergehenden Ansprüche, wobei die Rasthaken (39, 39') durch eine Bewegung aufeinander zu von den Rastelementen (41) gelöst werden können.

7. Befestigungssystem (1) nach einem der vorhergehenden Ansprüche, wobei die Basis (5) eine erste Auflagefläche (29) aufweist, die eingerichtet ist, an der ersten Wandoberfläche (17) anzuliegen.

8. Befestigungssystem (1) nach Anspruch 7, wobei sich die Befestigungsarme (7, 7') an einer der ersten Auflagefläche (29) gegenüberliegenden Fläche (31) der Basis (5) abstützen und/oder mit dieser Fläche (31) verbunden sind.

9. Befestigungssystem (1) nach einem der vorhergehenden Ansprüche, wobei die Basis (5) wenigstens einen, vorzugsweise elastisch, verformbaren Abschnitt (35, 35') aufweist, und eingerichtet ist, durch den Ausschnitt (13) hindurchgeführt zu werden, wenn der Ausschnitt (13) eine geringere Ausdehnung als die Basis (5) aufweist.

10. Befestigungssystem (1) nach Anspruch 9, wobei die Basis (5) einen Vorsprung (37) aufweist, der die Durchgangsöffnung (27) umgibt und ausgestaltet ist, am Rand des Ausschnitts im Wandelement (15) anzuliegen, wobei der Vorsprung (37) eine Querschnittsfläche definiert, wobei die Basis (5) durch Verformen des verformbaren Abschnitts (35, 35') so verformt werden kann, dass ihr Querschnitt in wenigstens einer Ebene kleiner ist als die Querschnittfläche.

11. Befestigungssystem (1) nach einem der vorhergehenden Ansprüche, wobei die Befestigungsarme (7, 7'), vorzugsweise elastisch, verformbar und eingerichtet sind dann, wenn die Befestigungsarme (7, 7') mit den Rasthaken (39, 39') eingreifen, so verformt zu werden, dass die Befestigungsarme (7, 7') durch die Durchgangsöffnung (27) der Basis (5) zurückgeführt werden können.

12. Befestigungssystem (1) nach einem der vorhergehenden Ansprüche, wobei die Rasthaken (39, 39') einen Hebel (51, 51') aufweisen, wobei der Hebel (51, 51') eingerichtet ist, den Rasthaken (39, 39') von den Rastelementen (41) zu lösen.

13. Befestigungssystem (1) nach einem der vorhergehenden Ansprüche, wobei die Rasteinheit (9) eine zweite Auflagefläche (49) aufweist, die eingerichtet ist an der zweiten Wandoberfläche (19) des Wandelements (15) anzuliegen, dann wenn die Befestigungsarme (7, 7') mit den Rastelementen (41) eingreifen.

14. Befestigungssystem (1) nach einem der vorhergehenden Ansprüche, wobei die Rasteinheit (9) eine größere Ausdehnung aufweist als die Durchgangsöffnung (27).
